(19) Europäisches Patentamt
European Patent Office
Office européen des brevets

(11) **EP 2 244 228 A1**

(12) **EUROPEAN PATENT APPLICATION**

(43) Date of publication:
**27.10.2010 Bulletin 2010/43**

(51) Int Cl.:
*G06T 7/40* (2006.01)     *G01N 21/00* (2006.01)
*A61B 5/00* (2006.01)

(21) Application number: **09305338.7**

(22) Date of filing: **21.04.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(71) Applicant: **Koninklijke Philips Electronics N.V.
5621 BA Eindhoven (NL)**

(72) Inventor: **The designation of the inventor has not
yet been filed**

(74) Representative: **Roche, Denis et al
Philips IP&S France
Société Civile SPID
33 rue de Verdun
BP 313
92156 Suresnes Cedex (FR)**

(54) **Method and apparatus for scanning a slide or cartridge containing microobjects**

(57)   A method of imaging organic microobjects in a fluid (22) comprises:
- containing the fluid in a microscope slide or cartridge (10);
- determining a region of interest (44) of the slide or cartridge, on the basis of quality values associated with elementary regions of the slide or cartridge;
- scanning the region of interest relative to an imaging device (36).

Determining the region of interest and scanning the region of interest may be interlaced. A scanning path may be determined on the fly.

A system or apparatus (8) for imaging organic microobjects in a fluid (22) is also disclosed.

FIG. 5

EP 2 244 228 A1

**Description**

FIELD OF THE INVENTION

In a first aspect, the invention relates to a method of imaging organic microobjects in a fluid, comprising: containing the fluid in a slide or cartridge; determining a region of interest of the slide or cartridge; and scanning the region of interest relative to an imaging device.

In a second aspect, the invention relates to a system or apparatus for imaging organic microobjects in a fluid, the fluid being contained in a slide or cartridge, the apparatus comprising: an information processing device; an imaging device; and a scanner for scanning a region of interest relative to the imaging device.

BACKGROUND OF THE INVENTION

In the fields of microbiology, pathology and medicine, fluid samples containing organic microobjects such as cells, microbes, germs, bacteria, archaea, or fungi are routinely imaged using optical microscopes. To this end, the sample may be contained in a conventional microscope slide or cartridge. As compared to conventional microscope slides comprising a carrier glass and a cover slip, cartridges can often be handled more easily, and can be particularly convenient for automated microscope systems. The term "cartridge" as used in the present application includes any device for containing a fluid and having an optical window through which the fluid can be imaged. Such a device may, for example, be a microfluidic cartridge, a microfluidic circuit, a microfluidic chip, or a microtiter plate. A large variety of such fluidic devices have been developed in the past (see, for example, WO 96/07919 AI and references therein). A single cartridge, in conjunction with a suitable apparatus to which the cartridge can be coupled, may be designed for performing a multitude of different mechanical, chemical, and/or optical measurements on the fluid. Optical measurements use light for probing the fluid. Optical measurements may include microscopic imaging of the fluid, e.g. by conventional microscopy or by scanning microscopy, as well as spectroscopic analysis. Examples of conventional microscopy techniques are transmission, reflection, fluorescence, and dark-field microscopy. The focus of the present application is on optical inspection of microobjects suspended or otherwise contained in the fluid.

A problem is that the fluid contained in the slide or cartridge is often not homogeneous. Firstly, the distribution of the microobjects in the fluid is often not homogeneous. Secondly, when the microobjects are stained in the slide or cartridge, the intensity of the stain is usually not homogeneous. Exhaustive imaging of the entire optical window therefore often results in many images that are sub-optimal. A region of the slide or cartridge containing too many or too few microobjects, or in which the microobjects are understained or overstained, may lead to a microscopic image that cannot be treated by image processing software.

By way of example, consider a cartridge containing blood. As one cannot control the final position of every individual red blood cell (RBC) when it flows into the cartridge, there is usually a certain distribution of the density of RBCs in the optical window. Furthermore, if the blood is stained when it flows into the cartridge or after it has entered the cartridge, there are usually differences in stain uptake between cells on one side of the cartridge and on another side. Both cell distribution and stain uptake depend on factors referred to hereinafter as intrinsic factors. Intrinsic factors are understood to be factors that are determined by the cartridge design. Furthermore, the cell distribution and the stain uptake can also depend on other factors like temperature, humidity, and properties of the blood in the cartridge, for example the haematocrit influencing the viscosity. Factors that are independent of the cartridge design are referred to hereinafter as extrinsic factors.

It is an object of the invention to increase the efficiency of said method of imaging organic microobjects. It is another object of the invention to increase the efficiency of said system or apparatus for imaging organic microobjects. These objects are achieved by the features of the independent claims.

SUMMARY OF THE INVENTION

According to the first aspect of the invention, the region of interest of the slide or cartridge is determined on the basis of quality values associated with elementary regions of the slide or cartridge. This allows confining the region of interest to a selection of elementary regions having a sufficiently high quality value, to avoid scanning regions of the slide or cartridge of which it is expected that they would give rise to microscopic images of inferior quality. The size of each of the elementary regions may match the field of view of the imaging device, or be somewhat smaller. Each quality value is understood to indicate a quality of the elementary region. The quality may, for example, be a quality dependent on a total number of microobjects in the elementary region, or a quality dependent on a stain intensity of microobjects in the elementary region, or a quality dependent on a total number of a different kind of microobjects in the elementary region. In the present application, the term "microobjects" generally refers to the microobjects of interest, i.e. to the microobjects intended to be imaged. In addition to these microobjects, i.e. in addition to the microobjects of interest, the fluid may contain other kinds of organic or inorganic microobjects. Those microobjects may obstruct imaging the microobjects of interest. Thus an elementary region containing fewer of those unwanted microobjects (e.g. cells which are not intended to be imaged) may have a higher quality value than a neighbouring elementary cell containing more unwanted microobjects. In the following, if nothing to the contrary is stated, the term "microobjects" again refers exclusively to the microobjects of interest.

In this context, at least one of the quality values may represent a predefined, measured, or estimated quality of the microobjects in the associated elementary region. Also, the method may comprise: defining, measuring, or estimating, for at least one of the elementary regions, a quality of the microobjects in that elementary region. For example, an area density of the microobjects (i.e. a number of microobjects per area) or a stain intensity of the microobjects in the given elementary region may be defined, measured, or estimated.

Determining the region of interest may comprise determining, for each or at least one of the elementary regions, whether the respective quality value is within an allowed range. If the quality value is within the allowed range, the elementary region may be included in the region of interest. Otherwise, the elementary region may be excluded from the region of interest. If the quality value of the elementary region is found to be outside the allowed range, it may further be determined whether a distance to another elementary region is within a limit of tolerance, the other elementary region having a quality value within the allowed range. If the distance to the other elementary region is found to be within the limit of tolerance, the elementary region, although having a quality value outside the allowed range, may be included in the region of interest.

According to a first embodiment, at least one of the quality values is predefined. In other words, the at least one predefined quality value is defined before the fluid is contained in the slide or cartridge. This embodiment is based on the insight that a quality distribution of the fluid in the slide or cartridge may depend on intrinsic properties of the slide or cartridge and/or the fluid, such as the geometry of the slide or cartridge and/or the viscosity of the fluid. The at least one predefined quality value may be retrieved from a data carrier. The data carrier may be arranged on the slide or cartridge or elsewhere. For example, the data carrier may be an electronic or optical chip attached to the cartridge. Alternatively, the data carrier could be a storage device of an external work station such as a personal computer. The predefined quality value may be retrieved on the basis of a type of the slide or cartridge. For example, it may be retrieved from the data carrier on the basis of an identifier on the slide or cartridge, the identifier indicating the type of the slide or cartridge. A slide/cartridge type is defined by certain common characteristics of the slides/cartridges that are considered to be of that type. Such characteristics may, for example, be structural, geometrical, or material characteristics of the slide or cartridge. A large number of different slide/cartridge types may be defined. Identical slides or cartridges are necessarily of the same type. However, the converse is not necessarily true. Slides or cartridges that are not identical are of the same type if they have the features that are characteristic of that type. Also, a single slide or cartridge may be of more than one type. In a narrower sense, a slide/cartridge type may refer to a number in a catalog assigned to all cartridges having certain characteristics in common, e.g. having identical or similar flow characteristics, or giving rise to an identical or similar distribution of microobjects. For example, in a cartridge catalog, the first digits of a number may correspond to a type of a cartridge. A slide/cartridge type could also refer to a unique number assigned to a specific batch of slides or cartridges which has been manufactured. All the slides or cartridges of the specific batch may have similar distribution properties with respect to a fluid. In the case of a cartridge having a channel structure, the type of the cartridge could also be determined from the channel structure, e.g. by identifying the channel structure from an image of the cartridge.

The method may further comprise computing at least one of the quality values on the basis of information about a property of the slide or cartridge, and/or on the basis of an identifier indicating a type of the slide or cartridge.

The property may, for example, comprise at least one of the following: a shape, a size, a material composition, and a surface property, e.g. a surface roughness. Each of these properties may be indicated, for example, in terms of identifiers, possibly in combination with suitable numerical parameters. For example, different shapes such as oval, elliptic, or rectangular, may be indicated by corresponding identifiers, e.g. letters or alphanumerical constants, possibly in combination with numerical parameters, e.g. parameters indicating an excentricity in the case of an elliptic cartridge, or an aspect ratio in the case of a rectangular slide or cartridge.

According to a second embodiment, the method comprises generating an image of at least one of the elementary regions, and determining an associated quality value on the basis of the image. Thus, the quality value in question is in this case not predefined but determined as a function of the fluid actually contained in the slide or cartridge. In a particular embodiment, the image may be an overall image in the sense that it shows a region of the slide or cartridge that is larger than a region that would fit into a field of view of the imaging device. The overall image may have a relatively low resolution. For example, the resolution may be sufficient for determining a distribution of the microobjects in the cartridge, or for determining a distribution of a stain intensity, without revealing microscopic details. Thus, the overall image may be taken by an objective lens having a considerably lower magnification than a microscope lens for imaging individual regions within the region of interest. The overall image may be taken prior to scanning the cartridge relative to the imaging device.

Determining the quality value on the basis of the image may comprise determining a number of microobjects per area and/or a stain intensity. Thus the quality value associated with one of the elementary regions may be derived from the number of microobjects per area and/or the stain intensity in that elementary region. The number of microobjects per area (area density) is understood to be the number of microobjects in the respective elementary region, divided by the area of the elementary region's projection on the optical window. The quality value may, for example, be defined proportional to the area density of the microobjects, or proportional to the stain intensity. Alternatively, the quality value could be defined as a function of both the number of microobjects per area and the stain intensity. Alternatively, the quality value could be defined as a vector comprising an entry indicating the number of microobjects per area and an entry indicating the stain intensity. In this context, the method may comprise retrieving at least one predefined parameter from a data carrier and determining the quality value on the basis of the number of microobjects per area and/or the stain intensity and the predefined parameter.

The predefined parameter may, for example, indicate a width or height of a Gaussian-like or Lorentzian-like function of the number of microobjects per area and/or the stain intensity, and determining the quality value may comprise evaluating that function.

According to a third embodiment, the quality values comprise a third quality value, and the method comprises:

- retrieving from a data carrier a predefined first quality value associated with one of the elementary regions;
- generating an image of the elementary region or of a neighbouring elementary region;
- determining a second quality value on the basis of the image; and
- determining the third quality value on the basis of the first quality value and the second quality value.

Thus, the region of interest is determined on the basis of the third quality value, the latter being derived from both predefined data and from the image of the elementary region, the image reflecting properties of the fluid actually contained in that region of the slide or cartridge. For example, when blood is introduced into a passive cartridge, it will flow by capillary forces. This results in a certain distribution of red blood cells that can be taken into account when optically imaging the cartridge. This allows for an efficient scanning strategy which may depend mainly on the detected cartridge type but may also adapt to external factors (like temperature, humidity, blood viscosity) by image processing methods. More efficient imaging, and a shorter time to diagnosis may thus be achieved.

The third quality value may be a sum or a product of the first quality value and the second quality value. If the third quality value is the sum of the first quality value and the second quality value, the value 0 (zero) may indicate a neutral or critical quality. Thus, if both the first quality value and the second quality value are zero, the third quality value would also be zero and indicate a neutral or critical quality. Analogously, if the third quality value is the product of the first quality value and the second quality value, a neutral or critical quality may be conveniently indicated by the value 1 (one).

The method may comprise determining a scanning path. The scanning path is understood to be the trajectory along which the slide or cartridge is displaced relative to the imaging device to scan the region of interest. The regions may be arranged according to a rectangular lattice. In this case, the scanning path may be a serpentine path. Scanning along a serpentine path is a well-known technique. After scanning a particular line, a subsequent line is scanned in the reverse direction.

Determining the region of interest and scanning the region of interest may be interlaced, the scanning path being determined on the fly. Thus, the region of interest is determined while scanning.

According to the second aspect of the invention, the system or apparatus for imaging organic microobjects in a fluid comprises an information processing device for determining a region of interest of the slide or cartridge, on the basis of quality values associated with elementary regions of the slide or cartridge. The details described above with reference to the method of imaging organic microobjects are equally applicable to the system or apparatus. The imaging device may comprise a microscope objective. Thus, the scanner is capable of scanning the region of interest relative to the microscope objective. The apparatus or system is thus capable of generating a series of microscopic images, each image showing a distinct region of the region of interest.

In a related aspect, a data carrier carries instructions for controlling a system or an apparatus to perform the method as described above. The data carrier may, for example, be a magnetic or optical data carrier, such as a hard disk, a CD-ROM, a DVD, flash memory, or USB stick.

These and other aspects of the invention will be described below with reference to the accompanying drawings, in which identical parts or steps are designated in the same manner.

BRIEF DESCRIPTION OF THE DRAWINGS

Figure 1    schematically shows a top view of a cartridge for containing a fluid.

Figure 2    schematically shows a cross section of the cartridge shown in Figure 1.

Figure 3    schematically shows a system for imaging the cartridge shown in Figures 1 and 2.

Figure 4    schematically illustrates an example of a region of interest of the cartridge shown in Figures 1 and 2.

Figure 5    schematically illustrates a scanning path of the cartridge.

Figure 6    represents a flow chart of an example of a method of imaging a fluid contained in a slide or cartridge.

Figure 7    represents a flow chart of another example of a method of imaging a fluid contained in a slide or cartridge.

Figure 8    is a plot of a red blood cell area fraction versus a longitudinal position in a cartridge.

Figure 9    is a plot of an extrinsic quality value versus the longitudinal position of the cartridge.

DETAILED DESCRIPTION OF THE INVENTION

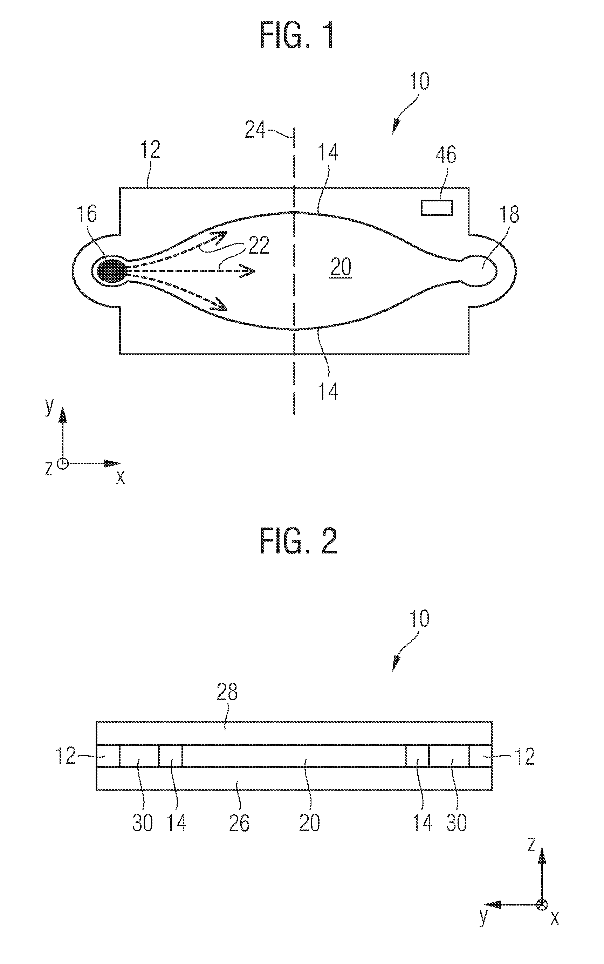

Referring to Figures 1 and 2, there is shown a cartridge 10 for containing a fluid 22. Figure 1 presents a top view, while Figure 2 shows a cross section along the perpendicular plane 24 shown in Figure 1. The cartridge 10 comprises a bottom plate 26 and a top plate 28 parallel to the bottom plate 26. Arranged between the bottom plate 26 and the top plate 28 are a circumferential wall 12 and an inner barrier 14 which maintain the top plate 28 at a distance from the bottom plate 26. The bottom plate 26, the top plate 28, and the inner barrier 14 together define an inner space 20 for receiving the fluid 22. The bottom plate 26, the top plate 28, the circumferential wall 12, and the inner barrier 14 together define an empty space 30 having no particular purpose and which will be ignored in the following. The cartridge 10 further comprises an inlet 16 for receiving the fluid 22 and an outlet 18 for discharging air displaced by the fluid 22 or for discharging the fluid 22 itself. The fluid 22 may be a gas or a liquid. Typically, it is a liquid. The fluid 22 may for example be blood or a solution comprising blood. The inner barrier 14 has a streamlined shape for reducing turbulence in the fluid 22, i.e., for promoting a laminar flow of fluid 22. The inner barrier 14 thus has a twofold purpose, namely, that of a spacer between the bottom plate 26 and the top plate 28, and that of means for guiding the fluid 22 between the inlet 16 and the outlet 18. Note that in the Figures the proportions are not to scale. The inner space 20 is very thin (less than one millimeter, typically a few micrometers) so that in the case of the fluid 22 being a liquid, the liquid 22 introduced at inlet 16 flows into the inner space 20 by capillary forces. The bottom plate 26 and the top plate 28 are transparent, so that the fluid contained in the inner space 20 can be imaged in transmission. Each of the plates 26, 28 provides an optical window. The bottom plate 26 and the top plate 28 may be transparent to the entire spectrum of visible light, or only to a subspectrum, or only to certain frequencies. The plates 26, 28 may consist of, for example, glass or a plastic material. The x, y, and z directions shown in Figures 1 to 5 have been defined as follows: The x, y plane is parallel to both the bottom plate 26 and the top plate 28. The x direction (longitudinal direction) has been chosen parallel to a main flow direction of the fluid 22, while the y direction (transverse direction) is perpendicular to the main flow direction. The z direction is perpendicular to the bottom plate 26 and the top plate 28. The size of the cartridge 10 may be of the order of a few millimetres or centimetres in the x direction and in the y direction, and less than one centimetre in the y direction. However, different geometrical shapes and sizes are possible. The cartridge 10 further comprises an identifier 46 which uniquely identifies the type of cartridge. The identifier 46 may, for example, be a barcode or an alphanumerical constant. Furthermore it is emphasized that the invention is also applicable to cartridges incorporating further functionalities, such as chemical measurements, in addition to imaging through the optical window.

In order to image the fluid 22, the fluid 22 is first introduced via the inlet 16. Capillary forces then cause the fluid 22 to flow into the inner space 20. Air or another fluid which may have been present in the inner space 20 prior to introducing the fluid 22 is thereby forced out of the inner space 20 via the outlet 18. When the inner space 20 has been filled with the fluid 22, the fluid 22 stops flowing and comes to a rest. A staining dye (not shown), such as haematoxylin and eosin (H & E) may be introduced via the inlet 16 together with the fluid 22 in order to stain the fluid 22 and/or microobjects suspended in the fluid 22. Alternatively or additionally, a staining dye could be included in the cartridge. The staining dye could, for example, be contained in a dissolvable coating on an inner surface of the cartridge 10. Thus the dye would be released to the fluid 22 when the fluid 22 contacts the coating. Once the fluid 22 has filled the inner space 20, it is ready for being imaged by means of an imaging device such as an optical scanning microscope.

As mentioned at the beginning, the fluid 22, considered over the entire inner space 20, is usually not homogeneous. In particular, it may be expected that characteristics of the flow of the fluid 22 (velocity, turbulence) during the process of filling the inner space 20 will significantly influence a final distribution of microobjects (not shown) suspended in the fluid. Also, if a staining agent is added to the fluid 22, e.g. at the inlet 16, one may expect that the staining intensity will not be homogeneous over the entire volume 20. For instance, if a finite amount of staining agent is added, it may be expected that those microobjects which first come into contact with the staining agent at the inlet 16 will pick up a larger amount of the staining agent than microobjects passing through the inlet 16 at a later moment. Assuming that those microobjects which pass the inlet 16 first are also those which are carried the furthest by the fluid 22, the stain intensity could be generally larger near the outlet 18 than near the inlet 16 when the fluid 22 has come to a rest. In this case, an optimum staining intensity might be expected near a central region of the inner space 20. Of course, the flow pattern of the fluid 22 may be very complex. Therefore, the distribution of microobjects and/or a staining intensity may be equally complex.

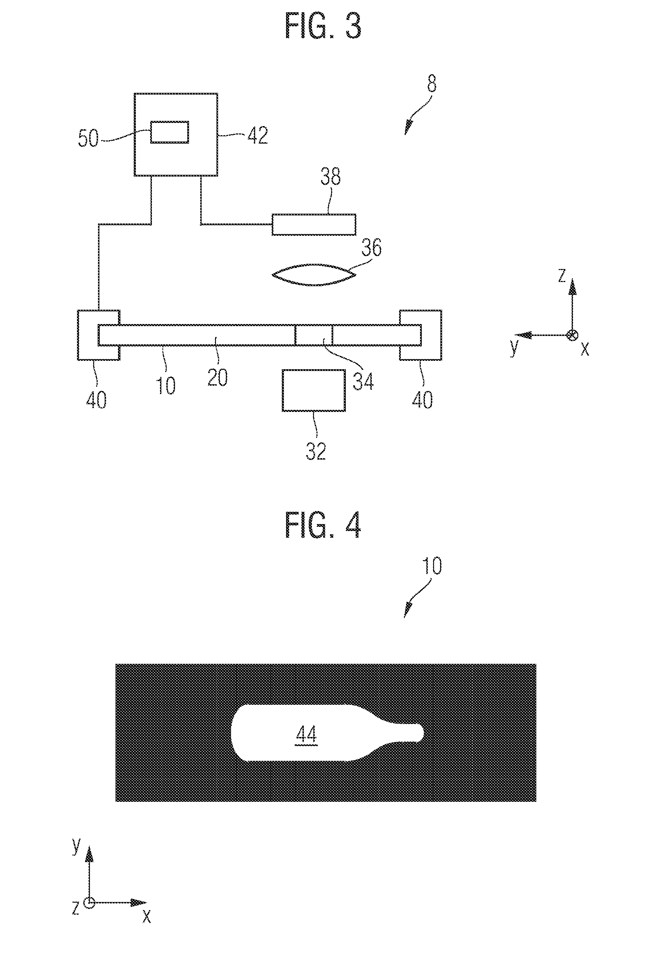

Referring now to Figure 3, there is schematically represented a system 8 for imaging the cartridge 10 described above with reference to Figures 1 and 2. The system 8 comprises a light source 32 for illuminating a region 34 of the cartridge 10 and a microscope objective 36 for generating an optical image of the region 34 on an image sensor 38. Note that the microscope objective 36 is schematically represented as a single lens; in reality, the microscope objective 36 may comprise a system of lenses and/or other optical components such as mirrors or prisms. The image sensor 38 may, for example, comprise a pixelated photo sensor, for example, a charge coupled device (CCD). The image sensor 38 is coupled (possibly via intermediate electronic devices) to an information processing device 42. The information processing device 42 may, for example, be an electronic control unit or a computer, e.g. a PC. The information processing device 42 comprises a data carrier 50 carrying instructions for controlling the information processing device 42. The data carrier may, for example, be a magnetic data carrier such as a hard disk, or an optical data carrier such as a CD, DVD, or flash memory. The data carrier 50 may be permanently installed in the information processing device 42, or it may be removable from the information processing device 42. The system 8 also comprises a scanner 40 for holding the cartridge 10 and for displacing the cartridge 10 relative to the light source 32 and the microscope objective 36 in a plane parallel to the x, y plane. The motion of the scanner 40 is controlled by the information processing device 42.

The system 8 operates as follows. It first determines the type of the cartridge 10 by reading its identifier 46. Based on the type of the cartridge 10 the information processing device 42 then retrieves from a database stored on the data carrier 50 a predefined first map indicating for each of a plurality of elementary regions of the cartridge a respective first quality value (intrinsic quality value) $Q_{int}$. Each of the elementary regions fits into the field of view of the microscope objective 36 when positioned in front of the objective by means of the scanner 40. In the example shown, the database is integrated in the information processing device 42. Alternatively it could be located elsewhere. For example, the database may be retrieved from another information processing device via a local network or via the internet. The system 8 then generates an overall image of the cartridge 10, either by rapidly scanning the cartridge 10 relative to the microscope objective 36 and combining the images thus obtained, or in a single shot (exposure) using another objective (not shown). On the basis of the overall image, the information processing device 42 determines a second map. The second map is analogous to the first map in that it indicates for each of the plurality of elementary regions a second quality value (extrinsic quality value) $Q_{ext}$. Each second quality value is derived from the number of microobjects per area and/or the stain intensity in the respective region of the cartridge 10. The information processing device 42 derives the number of microobjects per area and the stain intensity from the overall image using image processing software, possibly including feature recognition software. From the first map and the second map, the information processing device 42 derives a third map by determining, for each of the plurality of elementary regions, a third quality value on the basis of the first quality value and the second quality value associated with that elementary region. From the third quality map, the information processing device 42 determines a region of interest of the cartridge 10, the region of interest having a higher average third quality value than the remaining regions of the plurality of elementary regions not included in the region of interest. From the region of interest, or directly from the third map, the information processing device 42 determines a scanning path along which the cartridge 10 is to be displaced relative to the light source 32 and the microscope objective 36. The scanning path may be determined before or during the process of scanning. The scanning path is determined such that it passes through each of those elementary regions in the plurality of regions that are part of the region of interest. In other words, when the cartridge is scanned relative to the microscope objective 36, each of those regions will be brought into an imaging position in front of the microscope objective 36 at one time during the scanning process.

Alternatively, the region of interest could be determined only on the basis of the predefined first map. The third map would then be identical to the first map. In a special embodiment, the region of interest itself could be retrieved from the data carrier. In this regard it is noted that the region of interest may, for example, represent a binary map of the cartridge: any elementary region within the region of interest has a sufficient quality value, while any elementary region outside the region of interest has an insufficient quality value.

In another variation, the region of interest could be determined only on the basis of the second map. The third map would then be identical to the second map.

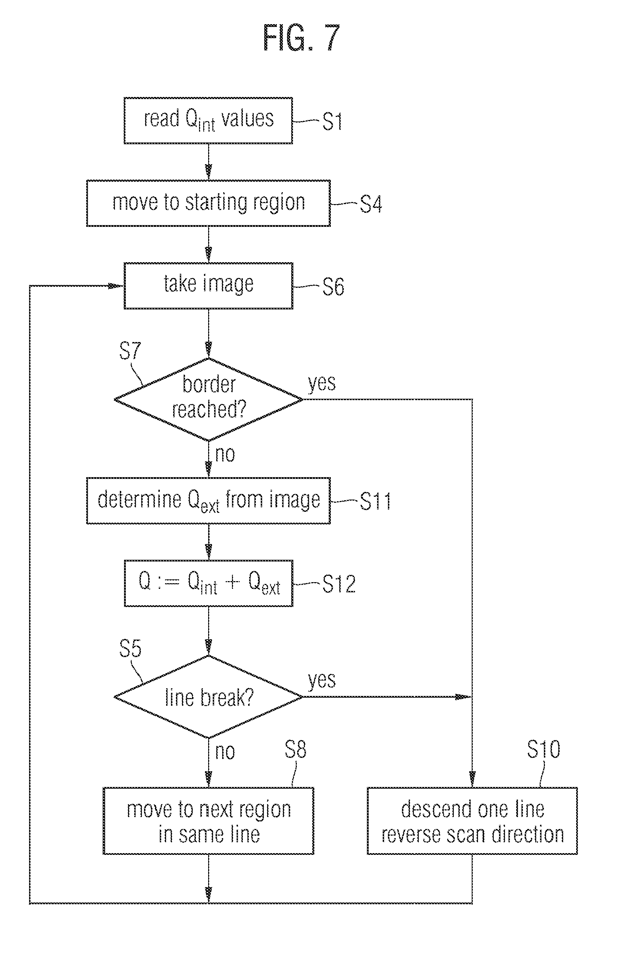

According to an alternative embodiment (further described with reference to Figure 7), the second quality values are not determined from an overall image taken before the scan, but on the fly, from microscope images taken during the scan.

Schematically represented in Figure 4 is the third map described above with reference to Figure 3. The black rectangle corresponds to the optical window of the cartridge 10 through which the fluid contained in the cartridge 10 is imaged. Each elementary region having associated with it a quality value less than zero is represented black, whereas each elementary region having associated with it a quality value greater than zero is represented white. The latter regions together form the region of interest 44. Referring back to Figure 3, it is the region of interest 44 that is successively imaged by the microscope objective 36 in a series of exposures when the cartridge 10 is scanned relative to the microscope objective 36, to generate a sequence of microscopic images of the fluid 22 in the cartridge, each of the microscopic images showing one elementary region of the region of interest 44. The elementary regions having a negative quality value are not imaged.

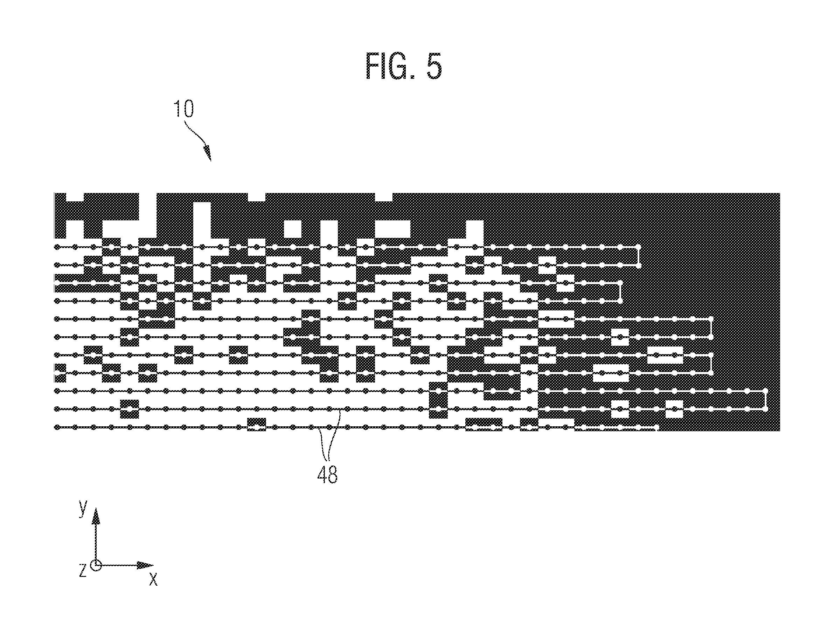

Figure 5 represents in greater detail a transition zone between the region of interest 44 described above with reference to Figure 4 and the surrounding region that is not scanned. The plurality of elementary regions consists of adjoining square regions arranged according to a square lattice. Each elementary region having a negative third quality value is represented black, while each region having a positive quality value is represented white. In the example shown, the scanning path 48 is a serpentine path (the continuous line). The scanning path 48 indicates the position of the microscope objective 36 relative to the cartridge 10 at successive instants in time. Each dot on the continuous line representing the scanning path 48 corresponds to the centre of an elementary area and to an instant at which a microscopic image of the respective elementary area is taken.

The serpentine scanning path 48 can be determined as follows. Starting at a point A (outside the area shown in the Figure), the microscope objective 36 is moved parallel to the x direction until it reaches a border of the optical window or until it has passed through six successive elementary regions having associated with them a quality value less than zero. Then, the microscope objective moves up one line in the y direction and scans a new line parallel to the x direction, its direction of motion now being opposite to its direction of motion at the previous line. Thus, the objective successively scans parallel lines. The condition that the objective moves on to the next line only after passing through six successive elementary areas having a quality value less than zero implies that the scanning path is not affected by small isolated low quality regions surrounded by high quality regions. It may be noted that this condition results in a hysteresis effect described as follows. Starting the scan at a point B (outside the area shown in the Figure) and moving downward after passing through six successive elementary regions having a negative quality value would not result in exactly the same scanning path 48 as the one shown in the Figure. The two paths would differ in the right part of the Figure where the line brakes take place.

Since braking and turning around the scan direction costs time with most if not all scanners, the lines of the serpentine path 48 are chosen parallel to the longitudinal axis of the optical window, or parallel to a longest dimension of the region of interest, thereby minimizing the number of turn-arounds. The starting point of the scan can be a fixed position at the top side of the sample, or, as indicated above, at a position having a maximum intrinsic quality value. If the starting point is located at a border of the region of interest, the entire region of interest may be scanned along one serpentine scanning path. Otherwise, i.e. if the starting point is not located at a border of the region of interest, scanning along a serpentine path will scan only part of the region of interest. The remaining part of the region of interest is then scanned in an additional step. To this end, a rule indicating when to go back to the starting point and start scanning in the other direction may be defined. A simple "end" rule could be that after stepping a line down and inverting the scan motion, all elementary regions lying ahead (i.e. all elementary regions in the new direction of motion) have negative quality values associated with them.

There is an infinite variety of possible scanning paths. For example, the cartridge 10 could be scanned relative to the microscope objective 36 along a spiral scanning path. This can be implemented, in analogy to a compact disc (CD) player, by designing the scanner 40 such that it is capable of rotating the cartridge relative to the microscope objective 36 and of translating the centre of rotation relative to the microscope objective 36. The scan may be stopped when an insufficient number of elementary regions having a positive quality value lie ahead on the spiral scanning path.

It is again noted that the quality values of the elementary regions may be determined before or during the scan. In the latter case, determining the quality values and scanning the slide or cartridge are interlaced. This may be implemented as follows. At each position indicated by a circle on the scanning path in Figure 5, a microscopic image of that elementary area is generated by the microscope objective 36 (see Figure 3). Depending on the quality of that image and possibly on the number of preceding successive elementary regions having negative quality values, it is decided whether or not to perform a line break.

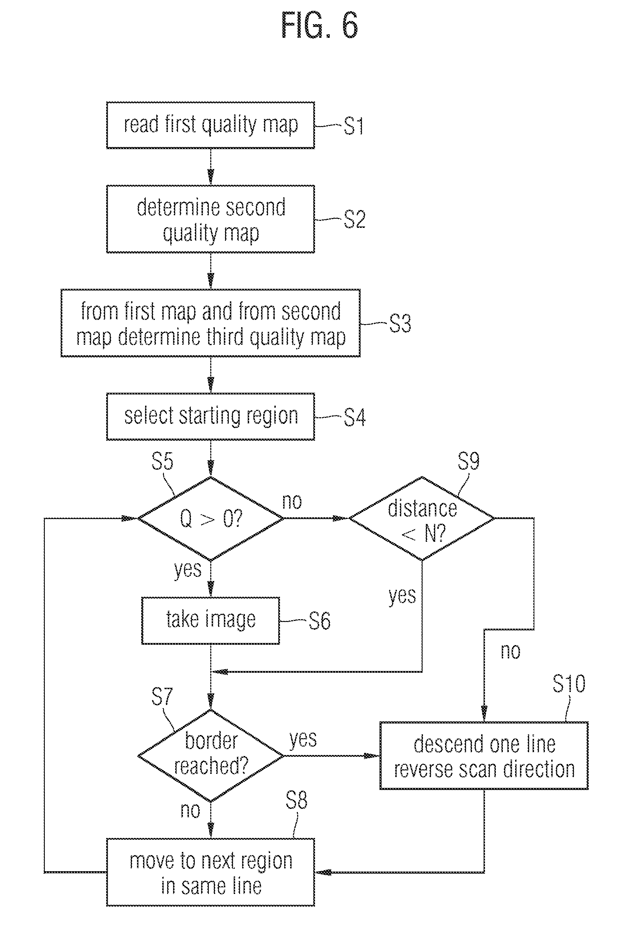

An example of a method as described above with reference to Figures 1 to 5 is schematically illustrated by the flow chart in Figure 6. In a first step S1, a first quality map (first map) associated with the particular type of the cartridge to be scanned is read from an external database. The first map indicates for each elementary region within the optical window of the slide/cartridge, or at least for a large number of these elementary regions, a first quality value (intrinsic quality value). Subsequently, in step S2, a second quality map (second map) is determined from an overall image of the optical window of a cartridge. The second map indicates for each or at least for a large number of elementary regions within the optical window of the slide/cartridge a second quality value (extrinsic quality value). From the first map and from the second map, a third quality map is computed (step S3), e.g. by adding or by multiplying, for each elementary region, the corresponding first quality value and the corresponding second quality value. The third map indicates for each (or at least for a large number of) elementary regions within the optical window of the slide/cartridge a third quality value (total quality value). In subsequent step S4, a starting region having associated with it a positive total quality value Q is selected. The total quality values indicated by the third quality map are used to determine a scanning path and thus a region of interest as follows. In step S5 it is determined whether the total quality value Q of the current elementary region (the region where the microscope objective is currently positioned) is positive. If so, a microscopic image of that elementary region is taken (step S6). In subsequent step S7 it is then determined whether a border of the optical window has been reached. If this is not the case, the objective is moved to the next elementary region in the same line (step S8). The process then returns to step S5. If in step S5 the quality value Q of the current region is not found to be positive, it is determined in step S9 whether the objective has passed over N (e.g. N=5, or N=6, or N=7) successive elementary regions having a negative quality value Q. Inversely stated, it is determined whether there are less than N elementary regions between the current region and the last elementary region having a positive quality value Q by. If this is the case, the process moves on to step S7. Otherwise the objective moves up one line and the scan direction is reversed (step S10). From step S10, the process moves on to step S8.

Figure 7 represents a flow chart of a method of scanning a slide or cartridge, wherein the scanning path is determined on the fly. In a first step S1, intrinsic quality values $Q_{int}$ associated with a plurality of elementary regions of the slide or cartridge are read from a data carrier. Information indicating an elementary region where the scan is to be started (starting region) is also read from the data carrier. In subsequent step S4, the slide or cartridge is displaced relative to a microscope objective so as to place the microscope objective over the starting region. An elementary region placed in front of the microscope objective is referred to as the current region. Thus, after step S4, the starting region is the current region. In subsequent step S6, an optical image of the current region is generated on an image sensor, e.g. a charge coupled device (CCD), by means of the microscope objective. An output signal of the image sensor is delivered to an information processing device to generate a digital image of the current elementary region. In subsequent step S7, it is determined whether a border of a predefined scan region, for example a border of an optical window, has been reached. If so, the microscope objective descends one line (relative to the slide or cartridge), and the scan direction is reversed (step S10). Otherwise, the digital image obtained for the current region is analysed using image processing software, for example, feature recognition software, to determine an extrinsic quality value $Q_{ext}$ indicating, for example, a number of microobjects per area or a stain intensity in the current region. In subsequent step S12, a total quality value Q is determined by adding to the extrinsic quality value $Q_{ext}$ an intrinsic quality value $Q_{int}$ associated either with the current elementary region or with the next elementary region in the same line. On the basis of the total quality value Q associated with the current region or associated with both the current region and the next region, it is decided in subsequent step S5 whether a line break in the scanning path is to be performed. In principal, a line break is performed if the total quality value Q is negative. However, a line break is not performed if in the current line of the scan no positive total quality value Q has been determined yet, or if in the N (e.g. N=5) preceding scanning steps in the current scanning line at least one positive total quality value Q was determined. If it is decided to perform a line break, the process moves on to previously described step S 10. Otherwise, the microscope objective is moved (relative to the slide or cartridge), to the next elementary region in the current line. This elementary region then forms the new current elementary region, and the process returns to step S6.

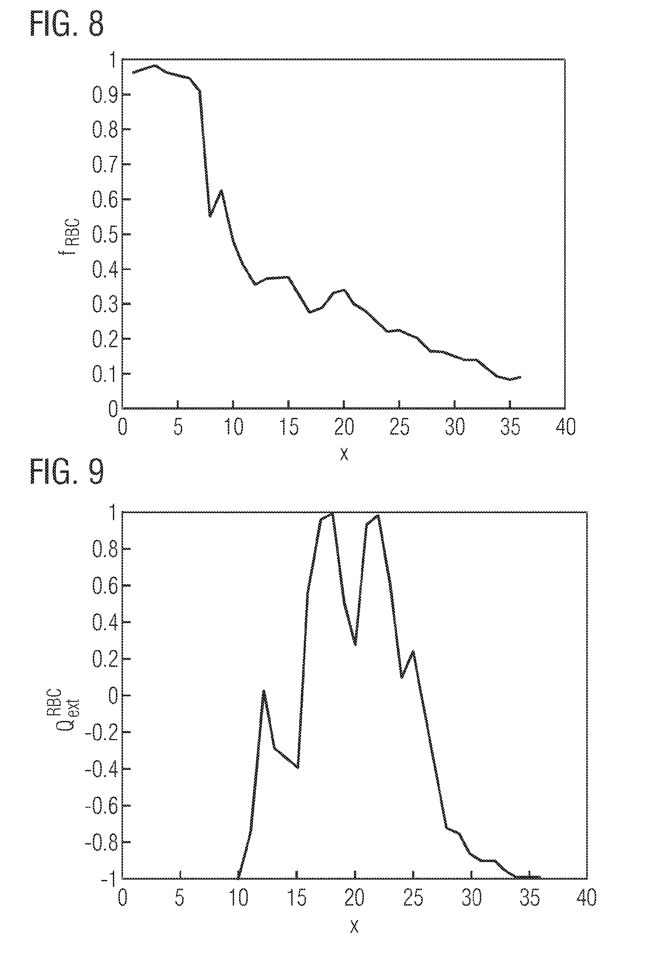

Referring now to Figures 8 and 9, there is illustrated an experimental determination of a quality value as a function of a number of microobjects (red blood cells in the example). In Figure 8, an experimentally determined area density of red blood cells in a cartridge as shown in Figures 1 and 2 is plotted as a function of the longitudinal coordinate x, for a central region (y=0) of the cartridge 10. Dimensionless units have been used. In the example shown, the density of red blood cells is too high at the vicinity of the inlet 16 (small x) and too high at positions near the outlet 18 (large x). Only positions 12 to 24 seem useful for image processing. This corresponds to $f_{RBC,OPT}$ = 0.285 and $\delta_{RBC}$ = 0.06. Using these values, $Q_{RBC,EXT}$ has been calculated as shown in Figure 9. Although the RBC area fraction measured as a function of x is not perfectly smooth, it can clearly be used to optimize the scanning to regions with positive quality.

The intrinsic quality values $Q_{int}$ associated with the elementary regions can be determined in a preparative or calibration step, for example, by exhaustive scanning of several fluid samples of the same type (e.g. blood samples) contained in the same type of cartridge and determining for each elementary region an average usefulness of the microscopic images thus obtained for the respective elementary region. The average usefulness, i.e. the intrinsic quality values $Q_{int}$, can be measured, for example, on a scale ranging from -1 (useless) via 0 (useful) to +1 (excellent). This will result in a distribution with, for example, -1 at the borders of the optical window and +1 somewhere near the centre of the optical window. This distribution is stored, e.g. in a database, as the first map, and can then be retrieved in accordance with the identifier of the cartridge (the cartridge ID).

Based on the intrinsic quality values (first quality values), a sample in the cartridge can be scanned using, for example, the serpent scanning method. As mentioned above, in this method odd lines are scanned in one direction and even lines are scanned in the opposite direction. When the intrinsic quality value at a current position is negative and when there are no other elementary regions in the current scan direction having a positive intrinsic quality value, the microscope objective is moved one line up (or down, depending on the convention of "up" and "down") and the scan direction is inverted.

By taking into account the extrinsic quality values (indicated by the second map), the scanning procedure may be further optimized for the current sample. The extrinsic quality values may be determined as follows, considering by way of example a blood sample, the organic microobjects being the red blood cells (RBCs) contained in the blood. A bonus/penalty factor $BP_{RBC}$ (<1) favouring a suitable amount of RBCs in an elementary region is defined. Too few RBCs in the elementary region would result in too few RBCs to be analyzed, while too many RBCs result in cluttered RBCs (RBCs that touch each other). Cluttered RBCs can be difficult to process by the image processing software. This can be described by the following equations:

$$Q_{ext}^{RBC} = BP_{RBC}\left[2g\left(f_{RBC}, f_{RBC}^{opt}, \sigma_{RBC}\right) - 1\right]$$

where $f_{RBC}$ is defined as:

$$f_{RBC} \equiv \frac{Area\ RBCs}{Area\ field\ of\ view} = \frac{number\ of\ RBC\ pixels}{number\ of\ pixels\ in\ image}$$

$f_{RBC}$ can be measured by image segmentation of the RBCs. $f_{RBC}^{opt}$ is the optimal ratio for the image processing software. $\delta_{RBC}$ controls how severely a deviation from the optimal ratio $f_{RBC}^{opt}$ is penalized. $g$ is the Gaussian distribution, defined as:

$$g(\vec{x}, \vec{\mu}, \sigma) = \frac{1}{\sigma\sqrt{2\pi}} e^{-\frac{|\vec{x}-\vec{\mu}|^2}{2\sigma^2}}$$

Similarly, a bonus/penalty factor $BP_{colour}$ can be introduced in order to favour a suitable staining colour

$$\overrightarrow{C_{RBC}}$$

of the RBCs. Here

$$\overrightarrow{C_{RBC}}$$

is a colour vector in, for example, the Hue-Saturation-Value or RGB colour space. The colour vector

$$\overrightarrow{C_{RBC}}$$

associated with a given elementary region of the cartridge can be measured by averaging the colour of the pixels that are segmented as RBC pixels. $\overrightarrow{C_{RBC}^{opt}}$ is the optimal colour, i.e. the colour that is most appropriate for the application, e.g. malaria detection.

$$Q_{ext}^{colour} = BP_{colour}\left[2g\left(\overrightarrow{C_{RBC}}, \overrightarrow{C_{RBC}^{opt}}, \sigma_C\right) - 1\right]$$

Depending on the type of sample, more extrinsic quality factors can be defined and measured by image processing, and summed together to obtain the total $Q_{ext}$.

The invention can be used in applications where cartridges containing organic microobjects are imaged, such as in pathology and cytology, e.g. for detection and/or identification of pathogens such as malaria.

While the invention has been illustrated and described in detail in the drawings and in the foregoing description, the drawings and the description are to be considered exemplary and not restrictive. The invention is not limited to the disclosed embodiments. Equivalents, combinations, and modifications not described above may also be realized without departing from the scope of the invention.

The verb "to comprise" and its derivatives do not exclude the presence of other steps or elements in the matter the "comprise" refers to. The indefinite article "a" or "an" does not exclude a plurality of the subjects the article refers to. It is also noted that a single unit may provide the functions of several means mentioned in the claims. The mere fact that certain features are recited in mutually different dependent claims does not indicate that a combination of these features cannot be used to advantage. Any reference signs in the claims should not be construed as limiting the scope.

**Claims**

1. A method of imaging organic microobjects in a fluid (22), comprising:

   - containing the fluid in a slide or cartridge (10);
   - determining a region of interest (44) of the slide or cartridge, on the basis of quality values associated with elementary regions of the slide or cartridge;
   - scanning the region of interest relative to an imaging device (36).

2. The method as set forth in claim 1, wherein at least one of the quality values represents a predefined, measured, or estimated quality distribution of the microobjects in the associated elementary regions.

3. The method as set forth in claim 1, wherein at least one of the quality values represents a predefined, measured, or estimated quality of the microobjects in the associated elementary region.

4. The method as set forth in claim 1, wherein determining the region of interest (44) comprises:

   - determining, for at least one of the elementary regions, whether the respective quality value is within an allowed range.

5. The method as set forth in claim 1, comprising:

   - retrieving at least one of the quality values from a data carrier (50).

6. The method as set forth in claim 1, comprising:

   - computing at least one of the quality values on the basis of information about a property of the slide or cartridge (10), and/or on the basis of an identifier (46) indicating a type of the slide or cartridge (10).

7. The method as set forth in claim 6, wherein the property comprises at least one of the following: a shape, a size, a material composition, and a surface property.

8. The method as set forth in claim 1, comprising:

   - generating an image of at least one of the elementary regions;
   - determining an associated quality value on the basis of the image.

9. The method as set forth in claim 8, wherein determining the quality value on the basis of the image comprises:

   - determining a number of microobjects per area and/or a stain intensity;
   - retrieving at least one predefined parameter from a data carrier (50);
   - determining the quality value on the basis of the number of microobjects per area and/or the stain intensity and the predefined parameter.

10. The method as set forth in claim 9, wherein determining the quality value comprises:

- evaluating a Gaussian-like or Lorentzian-like function of the number of microobjects per area and/or the stain intensity,

the predefined parameter indicating a width or height of the function.

11. The method as set forth in claim 1, wherein the quality values comprise a third quality value, and the method comprises:

- retrieving from a data carrier (50) a first quality value associated with one of the elementary regions;
- generating an image of the elementary region or of a neighbouring elementary region;
- determining a second quality value on the basis of the image; and
- determining the third quality value on the basis of the first quality value and the second quality value.

12. The method as set forth in claim 11, wherein the third quality value is a sum or a product of the first quality value and the second quality value.

13. The method as set forth in claim 1, comprising:

- determining a scanning path (48);

wherein determining the region of interest and scanning the region of interest are interlaced, the scanning path being determined on the fly.

14. A system or apparatus (8) for imaging organic microobjects in a fluid (22), the fluid being contained in a slide or cartridge (10), the apparatus comprising:

- an information processing device (42) for determining a region of interest (44) of the slide or cartridge, on the basis of quality values associated with elementary regions of the slide or cartridge;
- an imaging device (36);
- a scanner (40) for scanning the region of interest relative to the imaging device.

15. A system or apparatus as set forth in claim 14, wherein at least one of the quality values represents a predefined, measured, or estimated quality distribution of the microobjects in the associated elementary regions.

# FIG. 1

# FIG. 2

# FIG. 3

# FIG. 4

FIG. 5

EP 2 244 228 A1

# FIG. 6

read first quality map —S1

determine second quality map —S2

from first map and from second map determine third quality map —S3

select starting region —S4

S5 — Q > 0?

no → S9 — distance < N?

yes ↓ take image —S6

yes ↓

S7 — border reached?

yes → descend one line reverse scan direction —S10

no

no → move to next region in same line —S8

# FIG. 7

read $Q_{int}$ values — S1

move to starting region — S4

take image — S6

S7 — border reached? — yes

no

determine $Q_{ext}$ from image — S11

$Q := Q_{int} + Q_{ext}$ — S12

S5 — line break? — yes

no

S8 — move to next region in same line

S10 — descend one line reverse scan direction

FIG. 8

FIG. 9

Europäisches
Patentamt

European
Patent Office

Office européen
des brevets

# EUROPEAN SEARCH REPORT

Application Number

EP 09 30 5338

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | M. T. LE ET AL: "A novel semi-automatic image processing approach to determine Plasmodium falciparum parasitemia in Giemsa -stained thin blood smears" BMC CELL BIOLOGY, [Online] vol. 9, 2008, pages 1-12, XP002540787 Retrieved from the Internet: URL:http://www.pubmedcentral.nih.gov/picrender.fcgi?artid=2330144&blobtype=pdf> [retrieved on 2009-08-11] * page 4, column 1 - page 12, column 1; figures 2,3 * ----- | 1-15 | INV. G06T7/40 G01N21/00 A61B5/00 |
| X | S. W. S. SIO ET AL: "MalariaCount: an image analysis-based program for the accurate determination of parasitemia" J. MICROBIOL. METHODS, [Online] vol. 68, no. 1, January 2007 (2007-01), pages 11-18, XP002540788 Retrieved from the Internet: URL:http://www.ncbi.nlm.nih.gov/pubmed/16837087?ordinalpos=1&itool=EntrezSystem2.PEntrez.Pubmed.Pubmed_ResultsPanel.Pubmed_DiscoveryPanel.Pubmed_Discovery_RA&linkpos=1&log$=relatedarticles&logdbfrom=pubmed> [retrieved on 2009-08-11] * paragraph [002.]; figures 1-4 * ----- -/-- | 1-15 | TECHNICAL FIELDS SEARCHED (IPC)<br><br>G01N<br>A61B<br>G06T |

The present search report has been drawn up for all claims

| Place of search | Date of completion of the search | Examiner |
|---|---|---|
| Munich | 11 August 2009 | Consalvo, Daniela |

Europäisches
Patentamt

European
Patent Office

Office européen
des brevets

# EUROPEAN SEARCH REPORT

Application Number

EP 09 30 5338

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DIAZ G ET AL: "Infected cell identification in thin blood images based on color pixel classification: comparison and analysis" PROGRESS IN PATTERN RECOGNITION, IMAGE ANALYSIS AND APPLICATIONS. PROCEEDINGS 12TH IBEROAMERICAN CONGRESS ON PATTERN RECOGNITION, CIARP 2007. (LECTURE NOTES IN COMPUTER SCIENCE VOL. 4756) SPRINGER-VERLAG BERLIN, GERMANY, 2007, pages 812-821, XP019083029 ISBN: 3-540-76724-X * paragraphs [0001], [0003], [0004]; figures 1,2 * | 1-15 | |
| X | DI RUBERTO C ET AL: "Analysis of infected blood cell images using morphological operators" IMAGE AND VISION COMPUTING ELSEVIER NETHERLANDS, vol. 20, no. 2, 1 February 2002 (2002-02-01), pages 133-146, XP002514488 ISSN: 0262-8856 * paragraph [004.]; figure 1 * | 1-15 | |
| X | HALIM S ET AL: "Estimating malaria parasitaemia from blood smear images" 2006 9TH INTERNATIONAL CONFERENCE ON CONTROL, AUTOMATION, ROBOTICS AND VISION (IEEE CAT. NO.06EX1361) IEEE PISCATAWAY, NJ, USA, 2006, page 6 pp., XP002540927 ISBN: 1-4244-0342-1 * paragraphs [0II.] - [VII.] * | 1-15 | TECHNICAL FIELDS SEARCHED (IPC) |

-/--

The present search report has been drawn up for all claims

| Place of search | Date of completion of the search | Examiner |
|---|---|---|
| Munich | 11 August 2009 | Consalvo, Daniela |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

...........................................................................................

& : member of the same patent family, corresponding
   document

EPO FORM 1503 03.82 (P04C01)

Europäisches
Patentamt

European
Patent Office

Office européen
des brevets

**EUROPEAN SEARCH REPORT**

Application Number

EP 09 30 5338

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VISHNU V MAKKAPATI ET AL: "Segmentation of malaria parasites in peripheral blood smear images" ACOUSTICS, SPEECH AND SIGNAL PROCESSING, 2009. ICASSP 2009. IEEE INTERNATIONAL CONFERENCE ON, IEEE, PISCATAWAY, NJ, USA, 19 April 2009 (2009-04-19), pages 1361-1364, XP031459491 ISBN: 978-1-4244-2353-8 * paragraphs [002.] - [004.]; figures 1-6 * | 1-15 | |

-----

|  |  |  | TECHNICAL FIELDS SEARCHED (IPC) |
|---|---|---|---|

The present search report has been drawn up for all claims

| Place of search | Date of completion of the search | Examiner |
|---|---|---|
| Munich | 11 August 2009 | Consalvo, Daniela |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

* WO 9607919 A1